# EUROPÄISCHE PATENTSCHRIFT

(11) **EP 3 048 554 B1**
(45) Veröffentlichungstag und Bekanntmachung des Hinweises auf die Patenterteilung: **29.08.2018**
(21) Anmeldenummer: 15151748.9
(22) Anmeldetag: 20.01.2015
(51) Int. Cl.: G06K 7/00, G06K 13/08

(54) **Vandalismusgeschützter Kartenleser**
Card reader protected against vandalism
Lecteur de carte protégé contre le vandalisme

(43) Veröffentlichungstag der Anmeldung: 27.07.2016
(73) Patentinhaber: DDM Hopt + Schuler GmbH + Co. Kg, 78628 Rottweil (DE)
(72) Erfinder: Hopt, Karl-Rudolf, 78628 Rottweil (DE)
(74) Vertreter: Kohler Schmid Möbus Patentanwälte

(56) Entgegenhaltungen:
- DE-A1- 19 515 713
- DE-A1- 19 757 625
- FR-A1- 2 760 868

## Beschreibung

Die vorliegende Erfindung betrifft einen Kartenleser mit einer Kontaktiereinheit zum Datenaustausch mit einer in den Kartenleser eingeführten Chipkarte, deren Kontakte sich innerhalb einer Bodenaussparung eines Gehäusebodens in Karteneinführrichtung erstrecken und zum Kontaktieren von elektrischen Kontaktfeldern der Chipkarte in die Kartenbahn hineinragen, und mit einem Kartenendlagenschalter, der einen in die Kartenbahn hineinragenden Betätigungshebel aufweist.

Ein derartiger Kartenleser mit einem Kartenendlagenschalter ist beispielsweise durch FR 2 760 868 A1, DE 195 15 713 A1 oder DE 197 57 625 A1 bekannt geworden.

Bei solchen bekannten Kartenlesern können aus Vandalismus die Kontaktfedern der Kontaktiereinheit mittels eines über die Einführöffnung eingeführten Drahts hintergriffen und verbogen werden, wodurch der Kartenleser außer Kraft gesetzt ist. Gleiches gilt für die in die Kartenbahn ragenden Kontaktfedern eines Entladungsbleches und für den in die Kartenbahn ragenden Betätigungshebel eines Kartenendlagenschalters.

Es ist daher die Aufgabe der vorliegenden Erfindung, bei einem Kartenleser der eingangs genannten Art solche Beschädigungen zu verhindern oder zumindest zu erschweren.

Diese Aufgabe wird erfindungsgemäß dadurch gelöst, dass der Kartenleser einen in Karteneinführrichtung gegen eine Federkraft verschiebbar geführten Schieber aufweist, der den Betätigungshebel in einer vorderen Stellung abdeckt und in einer hinteren Stellung nicht abdeckt.

Erfindungsgemäß ist der Betätigungshebel bei nicht-eingeführter Chipkarte durch den Schieber abgedeckt und somit vor Vandalismus geschützt.

Die oben genannte Aufgabe wird erfindungsgemäß auch dadurch gelöst, dass die in die Kartenbahn ragenden Kontaktenden der Kontakte konvex gekrümmte Kontaktflächen in Form von Zylindersegmenten mit jeweils zwei Seitenwänden oder von Kugelkalotten sind, und dass in die Bodenaussparung ein Kontaktschutzteil mit Aussparungen für die konvex gekrümmten Kontaktflächen eingesetzt ist, welche die Aussparungen ausfüllen und in die Kartenbahn vorragen.

Erfindungsgemäß füllen die konvex gekrümmten Kontaktflächen die Aussparungen ringsum bis auf das zum Auslenken der Kontaktflächen erforderliche Spiel vollständig aus, so dass die konvex gekrümmten Kontaktflächen von keiner Seite hintergriffen werden können.

Besonders bevorzugt füllen die konvex gekrümmten Kontaktflächen die Aussparungen bis auf einen ringsum vorhandenen Spalt aus, dessen Spaltbreite kleiner als 0,3mm, insbesondere kleiner als 0,2mm ist.

Die Form der Aussparungen des Kontaktschutzteils entspricht der Form der konvex gekrümmten Kontaktflächen, die bevorzugt rechteckig ist.

Die oben genannte Aufgabe wird schließlich erfindungsgemäß auch dadurch gelöst, dass an dem Gehäuseboden ein Entladungsblech mit Entladungskontakten angeordnet ist, die in Karteneinführrichtung den Kontakten der Kontaktiereinheit vorgeordnet sind und zum Kontaktieren der Chipkarte in die Kartenbahn hineinragen, dass die in die Kartenbahn ragenden Kontaktenden der Entladungskontakten konvex gekrümmte Kontaktflächen in Form von Kugelkalotten oder von Zylindersegmenten mit jeweils zwei Seitenwänden sind, die durch Bodenaussparungen des Gehäusebodens in die Kartenbahn vorragen und die Bodenaussparungen ausfüllen.

Erfindungsgemäß füllen die konvex gekrümmten Kontaktflächen die Bodenaussparungen ringsum bis auf das zum Auslenken der Kontaktflächen erforderliche Spiel vollständig aus, so dass die konvex gekrümmten Kontaktflächen von keiner Seite hintergriffen werden können.

Besonders bevorzugt füllen die konvex gekrümmten Kontaktflächen die Bodenaussparungen bis auf einen ringsum vorhandenen Spalt aus, dessen Spaltbreite kleiner als 0,3mm, insbesondere kleiner als 0,2mm ist.

Die Form der Bodenaussparungen entspricht der Form der konvex gekrümmten Kontaktflächen, die bevorzugt rechteckig ist.

Weitere Vorteile der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

Es zeigen:
- Fig. 1: eine perspektivische Ansicht der Unterseite eines aus einem Gehäuseunterteil und einem Gehäusedeckel zusammengesetzten erfindungsgemäßen Kartenlesers;
- Fig. 2: eine perspektivische Ansicht der Oberseite des erfindungsgemäßen Kartenlesers bei abgenommenem Gehäusedeckel;
- Fig. 3: einen in das Gehäuseunterteil eingespritzten Kontaktsatz des erfindungsgemäßen Kartenlesers mit acht Kontakten;
- Fig. 4: ein in das Gehäuseunterteil eingesetzten Kontaktschutzteil zum Schutz der Kontaktenden;
- Fig. 5: ein am Gehäuseunterteil befestigtes Entladungsblech mit sechs Entladungskontakten; und
- Fign. 6a, 6b: einen im Gehäuseunterteil verschiebbar geführten Schieber zum Schutz eines Betätigungshebels eines Endschalters.

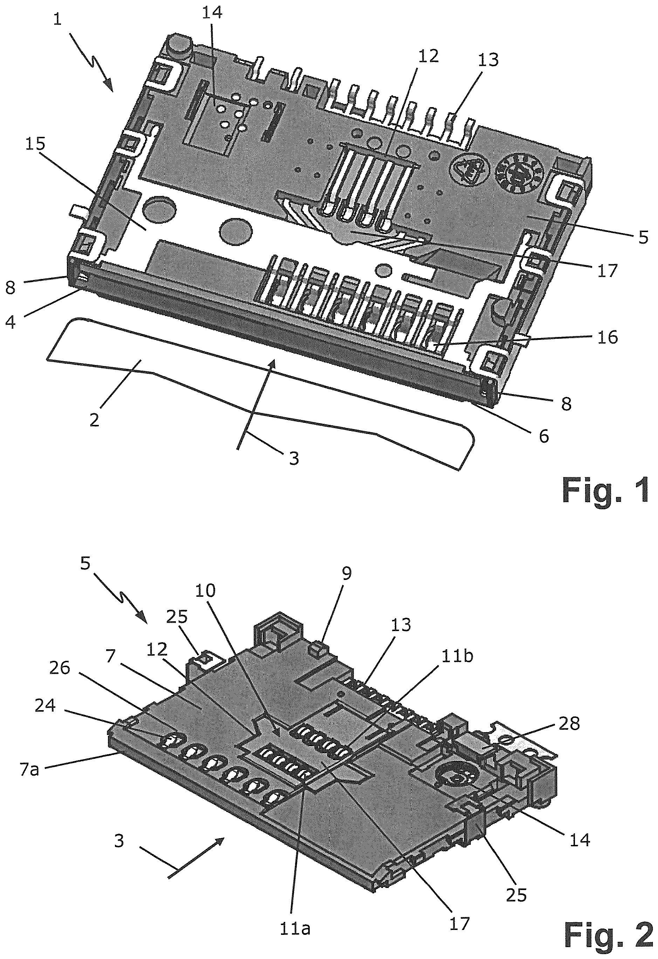

Der in **Fig. 1** gezeigte Kartenleser **1** ist ein so genannter Push/Pull-Kartenleser, bei dem eine Chipkarte **2** durch den Benutzer in Einführrichtung **3** über eine Einführöffnung **4** in den Kartenleser 1 bis in ihre Datenaustauschposition eingeführt und nach dem Datenaustausch vom Benutzer wieder aus dem Kartenleser 1 herausgezogen wird. Die Chipkarte 2 trägt zum Speichern der Daten einen Mikrochip (nicht gezeigt), dessen Kontakte als elektrische Kontaktfelder (nicht gezeigt) auf der Kartenoberfläche vorgesehen sind. Der Kartenleser 1 weist ein aus einem Gehäuseunterteil 5 und einem Gehäuseoberteil (Gehäusedeckel) **6** zusammengesetztes Kunststoffgehäuse auf; alternativ kann das Lesergehäuse aber auch einteilig ausgeführt sein.

Wie in **Fig. 2** gezeigt, definiert das Lesergehäuse mit dem Boden **7** des Gehäuseunterteils 5, zwei seitlichen Führungswänden **8** (Fig. 1) des Gehäuseoberteils 6 und mindestens einem Endanschlag **9** des Gehäuseunterteils 5 einen Kartenschacht, in dem die Chipkarte 2 in Einführrichtung 3 geführt ist. Das Gehäuseunterteil 5 weist zum Kontaktieren der elektrischen Kontaktfelder der Chipkarte 2 eine Kontaktiereinheit **10** mit acht Kontakten **11a, 11b** auf, die als elastisch verformbare Kontaktfedern ausgebildet und in zwei in Einführrichtung 3 hintereinander angeordneten, parallelen Reihen mit jeweils vier Kontakten gruppiert sind. Die beiden Kontaktreihen verlaufen jeweils quer, hier rechtwinklig, zur Einführrichtung 3. Die Kontakte der näher an der Einführöffnung 4 bzw. an der Vorderkante **7a** des Bodens 7 liegenden Kontaktreihe sind als vordere Kontakte 11a und die Kontakte der ferner liegenden Kontaktreihe als hintere Kontakte 11b bezeichnet. Die Kontakte 11a, 11b erstrecken sich inner einer Bodenaussparung **12** des Bodens 7 und ragen in die Kartenbahn hinein, so dass sie durch die eingeführte Chipkarte 2 aus der Kartenbahn ausgelenkt werden und dann auf der Kartenoberfläche gleiten, bis sie in der Datenaustauschposition die elektrischen Kontaktfelder der eingeführten Chipkarte 2 für einen Datenaustausch kontaktieren. Die acht Anschlussenden **13** der Kontakte 11a, 11b sind als Anschlussfüße an der Rückseite des Bodens 7 herausgeführt. Das Gehäuseunterteil 5 trägt im Boden 7 auch einen Kartenendlagenschalter **14,** der durch die am Endanschlag 9 anliegende Chipkarte 2 geschaltet wird, wodurch der Datenaustauch ausgelöst wird. Die Kontaktiereinheit 10 mit ihren Kontakten 11a, 11b und der Kartenendlagenschalter 14 sind beim Kunststoffspritzen des Gehäuseunterteils 5 als Einlegeteile mit Kunststoff umspritzt.

Wie in Fig. 1 gezeigt, befindet sich an der Unterseite des Gehäuseunterteils 5 weiterhin ein Entladungsblech **15,** das unmittelbar hinter der Vorderkante 7a angeordnet ist und sich quer zur Einführrichtung 3 erstreckt. Das Entladungsblech 15 weist sechs Entladungskontakte **16** in Form von elastisch verformbaren Kontaktfedern auf, die in Einführrichtung 3 vor den jeweils vier Kontakten 11a, 11b der beiden Kontaktreihen angeordnet sind und, wie in Fig. 2 gezeigt, auf der gleichen Seite wie die Kontakte 11a, 11b in die Kartenbahn hineinragen.

Zum Schutz der sich in der Bodenaussparung 12 erstreckenden Kontakte 11a, 11b ist außerdem ein Kontaktschutzteil **17** aus Kunststoff in die Bodenaussparung 12 eingesetzt.

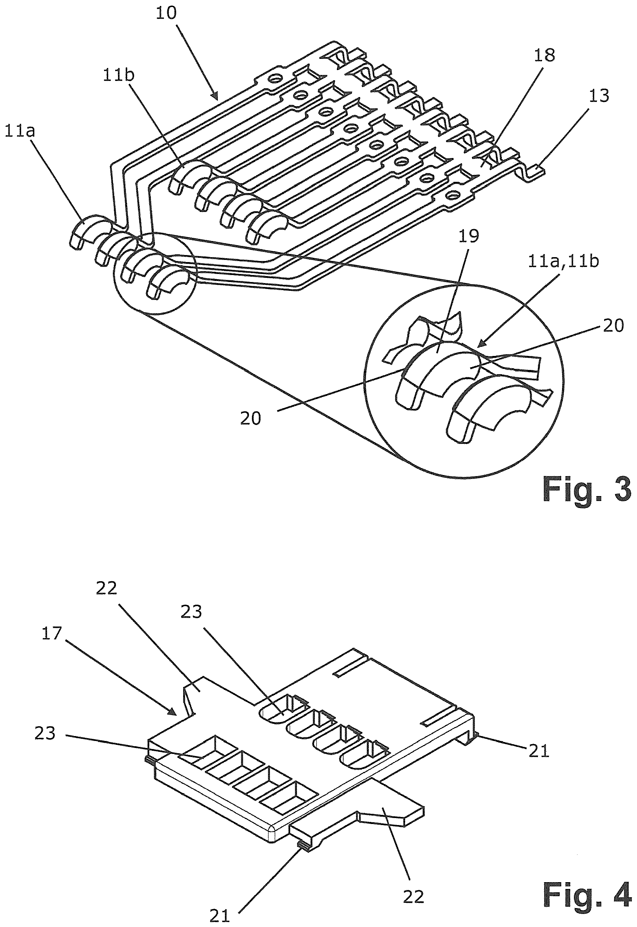

**Fig. 3** zeigt die Kontaktiereinheit 10 als einen noch einteiligen Kontaktsatz, bei dem die Kontakte 11a, 11b noch durch Verbindungsstege **18** miteinander verbunden sind. Erst nach dem Umspritzen mit Kunststoff werden die Verbindungsstege 18 entfernt und dadurch die acht Kontakte 11a, 11b voneinander getrennt. Die in die Kartenbahn ragenden Kontaktenden der Kontakte 11a, 11b sind - durch Umformen (Tiefziehen) eines ursprünglich flachen Blechstreifens - jeweils als konvex gekrümmte Kontaktflächen **19** in Form eines hohlen Zylindersegments mit zwei Seitenwänden **20** ausgebildet, das auf seiner der Kartenbahn abgewandten Seite offen ist. Die Seitenwände 20 erstrecken sich in Einführrichtung 3 und parallel zur Kartenbahn.

Alternativ können die konvex gekrümmten Kontaktflächen 19 auch als hohlen Kugelkalotten ausgebildet sein, die auf ihrer der Kartenbahn abgewandten Seite offen sind.

**Fig. 4** zeigt das Kontaktschutzteil 17, das in die Bodenaussparung 12 eingesetzt und darin mittels Rastnasen **21** verrastet wird, welche sowohl an seinem hinteren Ende als auch an zwei seitlich abstehenden, flügelförmigen Vorsprüngen **22** vorhanden sind. Der Kontaktschutzteil 17 weist ferner acht rechteckige Aussparungen **23** auf, die in zwei in Einführrichtung 3 hintereinander angeordneten, parallelen Reihen mit jeweils vier Aussparungen gruppiert sind. Wie in Fig. 2 gezeigt, ragen bei eingesetztem Kontaktschutzteil 17 die konvex gekrümmten Kontaktflächen 19 durch die Aussparungen 23 in die Kartenbahn vor und füllen dabei zusammen mit ihren Seitenwänden 20 die Aussparungen 23 bis auf einen ringsum vorhanden Spalt (Spaltbreite z.B. kleiner als 0,2mm) vollständig aus. Dadurch wird verhindert, dass die Kontaktflächen 19 mittels eines über die Einführöffnung 4 eingeführten Werkzeugs (z.B. mittels eines Drahts) hintergriffen und dadurch die Kontakten 11a, 11b verbogen werden können. Die Spaltbreite ist so klein wie möglich, lässt aber ausreichend Spiel, um die Kontaktflächen 19 berührungslos innerhalb der Aussparungen 23 auslenken zu können.

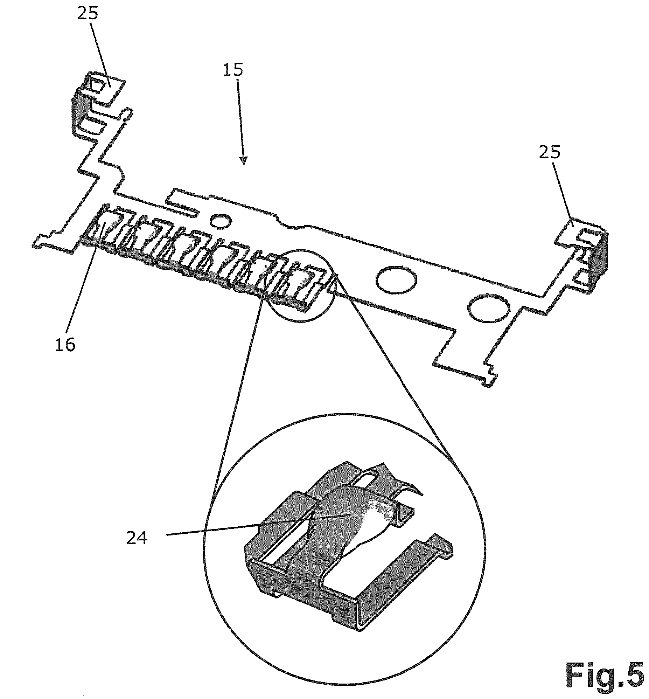

**Fig. 5** zeigt das Entladungsblech 15 mit seinen sechs Entladungskontakte 16, deren Federenden - durch Umformen (Tiefziehen) eines ursprünglich flachen Blechstreifens - zu konvex gekrümmten Kontaktflächen **24** in Form von hohlen Kugelkalotten umgeformt sind, die auf ihrer der Kartenbahn abgewandten Seite offen sind. Alternativ können die konvex gekrümmten Kontaktflächen 24 auch als hohle Zylindersegmente mit jeweils zwei Seitenwänden ausgebildet sein, die auf ihrer der Kartenbahn abgewandten Seite offen sind. Wie in Fign. 1 und 2 gezeigt, wird das Entladungsblech 15 in eine entsprechende Vertiefung der Unterseite des Gehäuseunterteils 5 eingelegt, und dann werden zwei seitliche Laschen **25** bügelförmig umgebogen, um das Entladungsblech 15 am Gehäuseunterteil 5 zu befestigen. Wie in Fig. 2 weiter gezeigt, ragen bei befestigtem Entladungsblech 15 die konvex gekrümmten Kontaktflächen 24 durch Bodenaussparungen **26** des Gehäuseunterteils 5 in die Kartenbahn vor und füllen dabei die Bodenaussparungen 26 bis auf einen ringsum vorhanden Spalt (Spaltbreite z.B. kleiner als 0,2mm) vollständig aus. Dadurch wird verhindert, dass die Kontaktflächen 24 mittels eines über die Einführöffnung 4 eingeführten Werkzeugs (wie z.B. ein Draht) hintergriffen und dadurch die Entladungskontakte 16 verbogen werden können. Die Spaltbreite ist so klein wie möglich, lässt aber ausreichend Spiel, um die Kontaktflächen 24 berührungslos innerhalb der Bodenaussparungen 26 auslenken zu können.

Beim Einführen der Chipkarte 2 in den Kartenleser 1 wird, noch bevor die Kontaktfelder der Chipkarte 2 von den Kontakten 11a, 11b der Kontaktiereinheit 10 kontaktiert werden, die Kartenseite von den Entladungskontakten 16 des Entladungsblechs 15 kontaktiert, so dass Spannung von einer elektrostatisch aufgeladenen Chipkarte 2 abfließen kann.

Anstatt das Entladungsblech 15 nachträglich am Gehäuseunterteil 5 zu befestigen, kann das Entladungsblech 5 beim Kunststoffspritzen des Gehäuseunterteils 5 auch als Einlegeteil mit Kunststoff umspritzt werden.

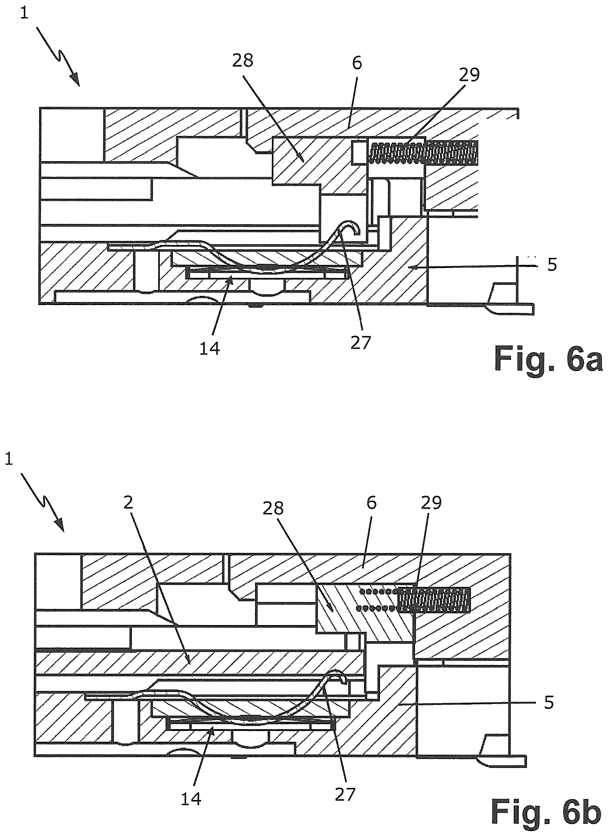

Wie in Fign. 2 und 6 gezeigt, ist zum Schutz eines in die Kartenbahn hineinragenden Betätigungshebels **27** des Kartenendlagenschalters 14 ein Schieber **28** im Gehäuseunterteil 5 in Einführrichtung 3 gegen die Kraft einer Feder **29** verschiebbar geführt. Bei nicht eingeführter Chipkarte 2 befindet sich der Schieber 28 in seiner in Fig. 1 und **Fig. 6a** gezeigten vorderen Stellung, in der er den Betätigungshebel 27 abdeckt. Beim Einführen der Chipkarte 2 wird der Schieber 28 von der Chipkarte 2 gegen die Kraft der Feder 29 in Einführrichtung 3 in die in **Fig. 6b** gezeigte Freigabestellung verschoben, in der der Betätigungshebel 27 nicht mehr abgedeckt ist und von der Chipkarte 2 ausgelenkt wird, um den Kartenendlagenschalter 14 zu betätigen. Durch den Schieber 28 wird verhindert, dass bei nicht eingeführter Chipkarte 2 der Betätigungshebel 27 mittels eines über die Einführöffnung 4 eingeführten Werkzeugs (wie z.B. ein Draht) hintergriffen und verbogen werden kann.

## Patentansprüche

1. Kartenleser (1) mit einer Kontaktiereinheit (10) zum Datenaustausch mit einer in den Kartenleser (1) eingeführten Chipkarte (2), deren Kontakte (11a, 11b) sich innerhalb einer Bodenaussparung (12) eines Gehäusebodens (7) in Karteneinführrichtung (3) erstrecken und zum Kontaktieren von elektrischen Kontaktfeldern der Chipkarte (2) in die Kartenbahn hineinragen, und mit einem Kartenendlagenschalter (14), der einen in die Kartenbahn hineinragenden Betätigungshebel (27) aufweist,
**dadurch gekennzeichnet,**
**dass** der Kartenleser (1) einen in Karteneinführrichtung (3) gegen eine Federkraft verschiebbar geführten Schieber (28) aufweist, der den Betätigungshebel (27) in einer vorderen Stellung abdeckt und in einer hinteren Stellung nicht abdeckt.

2. Kartenleser nach Anspruch 1 oder nach Oberbergriff von Anspruch 1, **dadurch gekennzeichnet, dass** die in die Kartenbahn ragenden Kontaktenden der Kontakte (11a, 11b) konvex gekrümmte Kontaktflächen (19) in Form von Zylindersegmenten mit jeweils zwei Seitenwänden (20) oder von Kugelkalotten sind und dass in die Bodenaussparung (12) ein Kontaktschutzteil (17) mit Aussparungen (23) für die konvex gekrümmten Kontaktflächen (19) eingesetzt ist, welche die Aussparungen (23) ausfüllen und in die Kartenbahn vorragen.

3. Kartenleser nach Anspruch 2, **dadurch gekennzeichnet, dass** die Zylindersegmente oder die Kugelkalotten hohl und auf ihrer der Kartenbahn abgewandten Seite offen sind.

4. Kartenleser nach Anspruch 2 oder 3, **dadurch gekennzeichnet, dass** die konvex gekrümmten Kontaktflächen (19) die Aussparungen (23) bis auf einen ringsum vorhandenen Spalt ausfüllen, dessen Spaltbreite kleiner als 0,3mm, insbesondere kleiner als 0,2mm ist.

5. Kartenleser nach einem der Ansprüche 2 bis 4, **dadurch gekennzeichnet, dass** die Aussparungen (23) des Kontaktschutzteils (17) rechteckig sind.

6. Kartenleser nach einem der vorhergehenden Ansprüche oder nach Oberbergriff von Anspruch 1, **dadurch gekennzeichnet, dass** an dem Gehäuseboden (7) ein Entladungsblech (15) mit Entladungskontakten (16) angeordnet ist, die in Karteneinführrichtung (3) den Kontakten (11a, 11b) der Kontaktiereinheit (10) vorgeordnet sind und zum Kontaktieren der Chipkarte (2) in die Kartenbahn hineinragen, dass die in die Kartenbahn ragenden Kontaktenden der Entladungskontakten (16) konvex gekrümmte Kontaktflächen (24) in Form von Kugelkalotten oder von Zylindersegmenten mit jeweils zwei Seitenwänden sind, die durch Bodenaussparungen (26) des Gehäusebodens (7) in die Kartenbahn vorragen und die Bodenaussparungen (26) ausfüllen.

7. Kartenleser nach Anspruch 6, **dadurch gekennzeichnet, dass** die Zylindersegmente oder die Kugelkalotten hohl und auf ihrer der Kartenbahn abgewandten Seite offen sind.

8. Kartenleser nach Anspruch 6 oder 7, **dadurch gekennzeichnet, dass** die konvex gekrümmten Kontaktflächen (24) die Bodenaussparungen (26) bis auf einen ringsum vorhandenen Spalt ausfüllen, dessen Spaltbreite kleiner als 0,5mm, insbesondere kleiner als 0,2mm ist.

9. Kartenleser nach einem der Ansprüche 6 bis 8, **dadurch gekennzeichnet, dass** die Bodenaussparungen (26) des Gehäusebodens (7) rechteckig sind.

## Claims

1. Card reader (1) comprising a contact unit (10) for data exchange with a chip card (2) which is inserted into the card reader (1), wherein contacts (11a, 11b) of the contact unit (10) extend within a bottom recess (12) of a housing bottom (7) in the card insertion direction (3) and project into the card path for contacting electric contact fields of the chip card (2), and comprising a card end position switch (14) which comprises an operating lever (27) that projects into the card path,
**characterized in that**
the card reader (1) comprises a slide (28) which is guided in the card insertion direction (3) such that it can be displaced against a spring force and covers the operating lever (27) in a front position and does not cover the operating lever in a rear position.

2. Card reader according to claim 1 or according to the preamble of claim 1, **characterized in that** the contact ends of the contacts (11a, 11b) that project into the card path are convexly curved contact surfaces (19) in the form of cylinder segments with two side walls (20) each or in the form of spherical segments, and that a contact protection part (17) comprising recesses (23) for the convexly curved contact surfaces (19) is inserted into the bottom recess (12), which contact surfaces fill the recesses (23) and project into the card path.

3. Card reader according to claim 2, **characterized in that** the cylinder segments or the spherical segments are hollow and open on their side facing away from the card path.

4. Card reader according to claim 2 or 3, **characterized in that** the convexly curved contact surfaces (19) fill the recesses (23) except for a gap around them, the gap width of which is smaller than 0.3mm, in particular smaller than 0.2mm.

5. Card reader according to any one of the claims 2 to 4, **characterized in that** the recesses (23) of the contact protection part (17) are rectangular.

6. Card reader according to any one of the preceding claims or according to the preamble of claim 1, **characterized in that** a discharge sheet (15) with discharge contacts (16) is arranged on the housing bottom (7), the discharge contacts being disposed upstream of the contacts (11a, 11b) of the contact unit (10) in the card insertion direction (3) and projecting into the card path for contacting the chip card (2), that the contact ends of the discharge contacts (16) which project into the card path are convexly curved contact surfaces (24) in the form of spherical segments or of cylinder segments with two side walls each which project through bottom recesses (26) of the housing bottom (7) into the card path and fill the bottom recesses (26).

7. Card reader according to claim 6, **characterized in that** the cylinder segments or the spherical segments are hollow and open on their side facing away from the card path.

8. Card reader according to claim 6 or 7, **characterized in that** the convexly curved contact surfaces (24) fill the bottom recesses (26) except for a gap around them, the gap width of which is smaller than 0.5mm, in particular smaller than 0.2mm.

9. Card reader according to any one of the claims 6 to 8, **characterized in that** the bottom recesses (26) of the housing bottom (7) are rectangular.

## Revendications

1. Lecteur (1) de cartes, comprenant une unité (10) de mise en contact qui est dévolue à l'échange de données avec une carte à puce (2) insérée dans ledit lecteur (1) de cartes, et dont les contacts (11a, 11b) s'étendent, dans la direction (3) d'insertion de ladite carte, à l'intérieur d'une cavité inférieure (12) ménagée dans le fond (7) d'un boîtier et pénètrent dans la trajectoire de la carte, en vue d'une mise en contact de champs de contact électrique de ladite carte à puce (2) ; et un commutateur (14) de position extrême de la carte, muni d'un levier d'actionnement (27) pénétrant dans ladite trajectoire de la carte,
**caractérisé par le fait**
**que** ledit lecteur (1) de cartes est pourvu d'une pièce coulissante (28) qui, guidée à coulissement dans la direction (3) d'insertion de la carte en opposition à la force d'un ressort, recouvre le levier d'actionnement (27) dans une position avancée et ne le recouvre pas dans une position reculée.

2. Lecteur de cartes conforme à la revendication 1 ou au préambule de la revendication 1, **caractérisé par le fait que** les extrémités des contacts (11a, 11b), pénétrant dans la trajectoire de la carte, sont des surfaces de contact (19) à courbure convexe qui se présentent comme des segments de cylindre respectivement dotés de deux parois latérales (20), ou comme des calottes sphériques ; et **par le fait qu'**une pièce (17) de protection des contacts, insérée dans la cavité inférieure (12), comporte des évidements (23) dédiés auxdites surfaces de contact (19) à courbure convexe qui comblent lesdits évidements (23) et font saillie dans ladite trajectoire de la carte.

3. Lecteur de cartes selon la revendication 2, **caractérisé par le fait que** les segments de cylindre ou les calottes sphériques sont creux (creuses) et sont ouvert(e)s sur leur côté pointant à l'opposé de la trajectoire de la carte.

4. Lecteur de cartes selon la revendication 2 ou 3, **caractérisé par le fait que** les surfaces de contact (19), à courbure convexe, comblent les évidements (23) à l'exception d'un interstice à étendue annulaire dans le sens périphérique, dont la largeur est inférieure à 0,3 mm, notamment inférieure à 0,2 mm.

5. Lecteur de cartes selon l'une des revendications 2 à 4, **caractérisé par le fait que** les évidements (23) de la pièce (17) de protection des contacts sont rectangulaires.

6. Lecteur de cartes conforme à l'une des revendications précédentes, ou au préambule de la revendication 1, **caractérisé par le fait qu'**une tôle de décharge (15), implantée au fond (7) du boîtier, est pourvue de contacts de décharge (16) qui sont placés en amont des contacts (11a, 11b) de l'unité (10) de mise en contact, dans la direction (3) d'insertion de la carte, et pénètrent dans la trajectoire de la carte en vue de la mise en contact de ladite carte à puce (2) ; et **par le fait que** les extrémités desdits contacts de décharge (16), pénétrant dans la trajectoire de la carte, sont des surfaces de contact (24) à courbure convexe qui se présentent comme des calottes sphériques ou comme des segments de cylindre respectivement dotés de deux parois latérales, qui font saillie dans ladite trajectoire de la carte en traversant des évidements inférieurs (26) pratiqués dans ledit fond (7) du boîtier, et comblent lesdits évidements inférieurs (26).

7. Lecteur de cartes selon la revendication 6, **caractérisé par le fait que** les segments de cylindre ou les calottes sphériques sont creux (creuses) et sont ouvert(e)s sur leur côté pointant à l'opposé de la trajectoire de la carte.

8. Lecteur de cartes selon la revendication 6 ou 7, **caractérisé par le fait que** les surfaces de contact (24), à courbure convexe, comblent les évidements inférieurs (26) à l'exception d'un interstice à étendue annulaire dans le sens périphérique, dont la largeur est inférieure à 0,5 mm, notamment inférieure à 0,2 mm.

9. Lecteur de cartes selon l'une des revendications 6 à 8, **caractérisé par le fait que** les évidements inférieurs (26) du fond (7) du boîtier sont rectangulaires.
